# EUROPEAN PATENT APPLICATION

(11) **EP 1 936 601 A1**
(43) Date of publication of application: **25.06.2008**
(21) Application number: 07123158.3
(22) Date of filing: 13.12.2007
(51) Int. Cl.: G09G 3/34, G09G 3/36

(54) **Backlight unit and liquid crystal display**

(30) Priority: 22.12.2006 KR 20060132951
(71) Applicant: Samsung Electronics Co., Ltd., Suwon-si Gyeonggi-do 443-742 (KR)
(72) Inventor: kang, Ho-woong Hyundai Homw Town 3-cha, Yongin-si, Gyeonggi-do (KR)
(74) Representative: Grootscholten, Johannes A.M.

(57) **Abstract**

A liquid crystal display includes: a liquid crystal panel; a liquid crystal driving part that processes an image signal input from an external source, drives the liquid crystal panel based on the image signal, and outputs image information of the image signal; a light source part that provides light to the liquid crystal panel, the light sourcing part including a plurality of point light sources which emit light of different colors; a user adjusting part that adjusts a color characteristic of an image displayed on the liquid crystal panel; and a light source driving part that supplies driving power to the point light sources based on the image information and the color characteristic.

## Description

### BACKGROUND

### Field of Invention

Apparatuses consistent with the present invention relate to a backlight unit and a liquid crystal display, and more particularly, to a backlight unit including a point light source and a liquid crystal display having the backlight unit.

### Description of the Related Art

In recent years, flat display devices such as a liquid crystal display (LCD), plasma display panel (PDP), an organic light emitting diode (OLED) and the like have been developed to replace a cathode ray tube (CRT).

Among the flat displays, an LCD device includes a liquid crystal panel including a thin film transistor substrate, a color filter substrate, and a liquid crystal layer interposed between both substrates. As the liquid crystal panel does not emit light by itself, a backlight unit that emits a light to the liquid crystal panel is located behind the thin film transistor substrate. A transmitted amount of the light emitted from the backlight unit is controlled depending on alignment conditions of liquid crystal molecules in the liquid crystal panel.

In recent years, a lamp as a line light source and a light emitting diode as a point light source have been used as the backlight unit, and a local dimming method of locally controlling light of the backlight according to users' preference has been realized.

Local dimming is a technique of dividing a light source part including light emitting diodes into a plurality of regions and controlling the divided light source part to emit the light having different luminescence. If light emitting diodes that emit the light having different colors are used as the light source of the backlight unit, there is a need for development of a variety of control methods of adjusting light using image information.

### SUMMARY

The present invention provides a backlight unit which is capable of adjusting a color characteristic of a light source part without difficulty, and a LCD using the backlight unit.

According to an aspect of the present invention, there is provided a LCD comprising: a liquid crystal panel; a liquid crystal driving part that processes an image signal input from an external source, drives the liquid crystal panel based on the image signal, and outputs an image information of the image signal; a light source part that provides a light to the liquid crystal panel, the light sourcing part including a plurality of point light sources which emits the light of different colors; a user adjusting part that adjusts a color characteristic of an image displayed on the liquid crystal panel; and a light source driving part that supplies a driving power to the point light sources based on the image information and the color characteristic.

The user adjusting part may comprise: a user interface (UI) generating part that generates a backlight color adjustment menu that adjusts the color characteristic of the light emitted from the point light sources; and a user input part that selects the backlight color adjustment menu, wherein the light source driving part adjusts the driving power supplied to the point light sources based on the selected backlight color adjustment menu.

The backlight color adjustment menu may comprise: a first color adjustment menu that adjusts saturation of a plurality of first colors; and a second color adjustment menu that adjusts a color mode of second colors which are mixtures of two of the first colors.

The UI generating part further may generate a liquid crystal panel color adjustment menu that changes a color characteristic of the image signal output from the liquid crystal driving part, and wherein, when the liquid crystal panel color adjustment menu is selected through the user input part, the liquid crystal driving part may adjust a driving signal applied to the liquid crystal panel based on the selected liquid crystal panel color adjustment menu.

If the image displayed on the liquid crystal panel is a moving image, the light source driving part may adjust the driving power supplied to the point light sources so that saturation of the moving image is changed.

The image information may comprise a luminescence information and a color information of the image signal.

The point light sources may comprise light emitting diodes or laser diodes.

According to another aspect of the present invention, there is provided a backlight unit comprising: a light source part that comprises a plurality of point light sources which emits a light of different colors; and a light source driving part that supplies a driving power to the point light sources based on an image information of an image signal input from an external source.

The image information may comprise at least one of a luminescence information, a color information being adjusted by a user and an image kind information.

If an image is a moving image, based on the image kind information, the light source driving part may adjust the driving power supplied to the point light sources so that saturation of the moving image is changed.

The point light sources may comprise light emitting diodes or laser diodes.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a control block diagram of an LCD according to a first exemplary embodiment of the present invention;
FIG. 2 is a control block diagram of an LCD according to a second exemplary embodiment of the present invention;
FIG. 3 is a view showing a backlight color adjustment menu according to the second exemplary embodiment of the present invention; and
FIG. 4 is a view showing a liquid crystal panel color adjustment menu according to the second exemplary embodiment of the present invention.

### DETAILED DESCRIPTION OF EXEMPLARY EMBODIMENTS

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

In the following exemplary embodiments, the same components are denoted by the same reference numerals, and explanation thereof will be representatively given in a first exemplary embodiment but will be omitted in other exemplary embodiments.

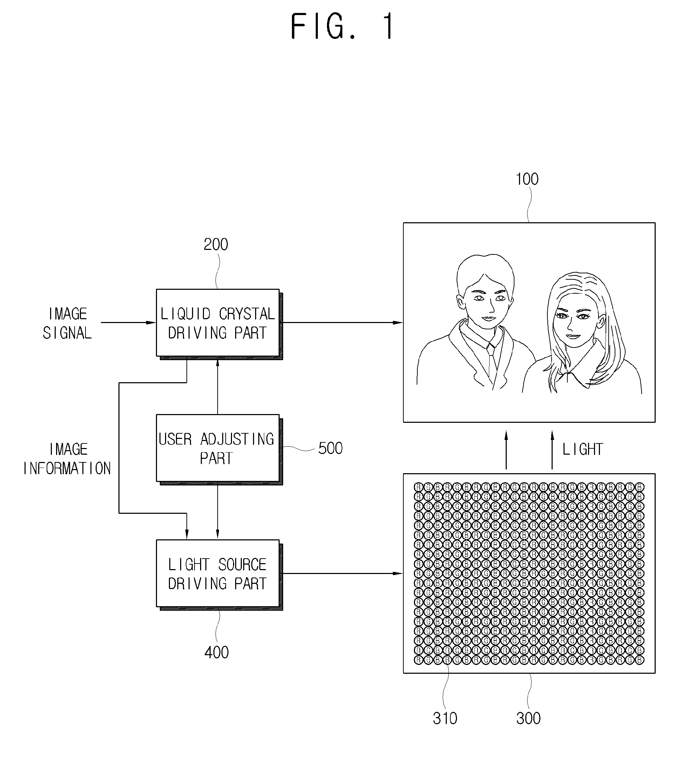

FIG. 1 is a control block diagram of an LCD according to a first exemplary embodiment of the present invention.

As shown in FIG. 1, an LCD according to a first exemplary embodiment of the present invention includes a liquid crystal panel 100, a liquid crystal driving part 200, a light source part 300, a light source driving part 400 and a user adjusting part 500.

The liquid crystal panel 100 typically is a rectangular shape and displays an image based on an image signal input from the outside. The liquid crystal panel 100 is driven by various driving signals, such as a data signal and a gate signal, which are output from the liquid crystal driving part 200. The liquid crystal panel 100 includes a thin film transistor substrate on which gate lines (not shown) for transmitting a scan signal, data lines (not shown) for transmitting the data signal, and thin film transistors (not shown) at intersections where the gate lines and the data lines are formed, a color filter substrate that faces the thin film transistor substrate, and a liquid crystal layer interposed between both substrates. In addition, a pixel electrode connected to the thin film transistor for a display of the image is formed in a pixel region defined by the intersections of the gate lines and the data lines.

The liquid crystal driving part 200 applies the gate signal, and the data signal which corresponds to the image signal, to the liquid crystal panel 100 according to the image signal and a control signal for the signals output from the outside. The liquid crystal driving part 200 includes an analog voltage generating part that generates the gate signal and various analog signals, a gate driving part, a data driving part and a timing controller that controls these components. The liquid crystal driving part 200 outputs image information of the image signal to the light source driving part 400. The image information includes a luminescence information and a color information of the image signal, and further includes information on particular color of a moving object if an image being currently displayed is a moving image. For example, in case of the motion in which a boat moves on the sea or a player moves in a playground, the color information of the motion image is provided to the light source driving part 400 so that only color of the moving boat or player can be adjusted even if color of the sea is similar to that of the boat or color of the player is similar to that of the playground.

The light source part 300 includes a plurality of point light sources 310 that emits the light having different colors to the liquid crystal panel 100. Local dimming for locally adjusting an amount of the light to the liquid crystal panel 100 is possible since the point light sources 310 are used as the light source, and the color of the light emitted from the light source part 300 may be differently adjusted since the point light sources 310 emit the light having the different colors. The plurality of point light sources 310 are mounted on a point light source circuit board having a rectangular shape similar to the liquid crystal panel 100. Since a lot of heat is generated in the point light sources 310, the point light source circuit board may be made of aluminum having good thermal conductivity as a main material. Although not shown, the LCD may further include a heat pipe, a cooling pin, a cooling fan and so on in order to facilitate heat radiation. The point light source circuit board is not limited to the rectangular shape but may be provided to have a plurality of bar shapes extending along a long side of the liquid crystal panel 100.

The point light sources 310 are arranged throughout a back side of the point light source circuit board. As shown in FIG. 1, the point light sources 310 that emit red, green and blue light are sequentially arranged in a line. As an alternative exemplary embodiment, the point light sources 310 that emit red, green and blue light may form a group of point light sources gathered in a triangular shape. Although not shown, the point light source 310 includes a chip that emits the light, a lead that connects the chip to the point light source circuit board, a plastic mold that surrounds the chip, and silicon and a bulb that are located on the chip. Although the point light sources 310 are formed of light emitting diodes as described above in this exemplary embodiment, the point light sources 310 are not limited thereto if only they can emit the light of different colors. For example, the point light sources 310 may include either laser diodes or carbon nano tubes. In addition, the point light sources 310 may be provided through adjusting the length of a lamp used as line light source.

The user adjusting part 500 adjusts a color characteristic of the image displayed on the liquid crystal panel 100. The color characteristic of the image signal means brightness, saturation and so on of the image. A user may adjust strength of a color of the image through the user adjusting part 500. This may be adjusted by controlling the driving signal applied to the liquid crystal panel 100 or the driving power supplied to the light source part 300. Particularly, in this exemplary embodiment, since the light source driving part 400 supplies the driving power to the light source part 300 based on the image information provided from the liquid crystal driving part 200, the user can adjust the color of the image in various ways. For example, assuming that an image of a red apple placed on a green table is displayed, a liquid crystal driving signal may be controlled to increase the saturation of red color of the red apple and a light source driving signal may be controlled to increase the intensity of blue light emitted from the point light sources 310 located at a portion corresponding to the green table. That is, the liquid crystal driving signal and the light source driving signal may be simultaneously controlled to adjust the color characteristic of the image as desired.

The light source driving part 400 supplies the driving power to the light source part 300 based on the image information output from the liquid crystal driving part 200 and the color characteristic information output from the user adjusting part 500. Luminescence of the light emitted from the light source part 300 including the point light sources 310 illuminated to the liquid crystal panel 100 may be adjusted entirely or locally. The luminescence of the point light source 310 depends on the intensity of the driving power supplied to the point light source 310, and the light source driving part 400 supplies different driving powers to the different point light sources 310 based on the image information and the color characteristic information. The light source part 300, which provides the light to the liquid crystal panel 100, and the light source driving part 400 are typically called as a backlight unit.

In addition to the above described elements, the present invention may be embodied by various exemplary embodiments through combining other elements.

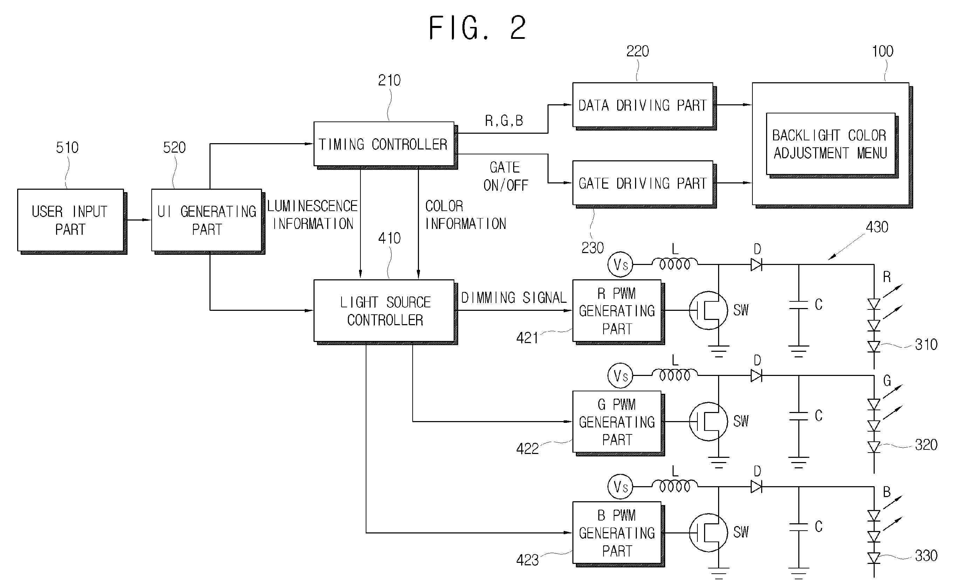

FIG. 2 is a control block diagram of an LCD according to a second exemplary embodiment of the present invention. As shown in FIG. 2, an LCD according to the second exemplary embodiment includes a liquid crystal panel 100, a timing controller 210, a data driving part 220 and a gate driving part 230 which are controlled by the timing controller 210. In addition, the LCD further includes a user input part 510, a user interface (UI) generating part 520, a light source controller 410, pulse width modulation (PWM) generating parts 421, 422 and 423, and an inverter 430 including switching elements. Here, the user input part 510 and the UI generating part 520 serve as a user adjusting part, and the light source controller 410, the PWM generating parts 421, 422 and 423, and the inverter 430 serve as a light source driving part.

The timing controller 210 receives RGB image signals R, G and B, a control input signal to control a display of these RGB image signals, etc. from an external image source. The timing controller 210 generates a gate control signal, a data control signal and a voltage selection control signal (VSC) based on the control input signal, converts the externally input RGB image signals R, G and B properly in accord with operation conditions of the liquid crystal panel 100, transmits the gate control signal to the gate driving part 230, the data control signal and the processed RGB image signals, R, G, and B to the data driving part 220, and the voltage selection control signal (VSC) to a gray scale voltage generating part (not shown). In addition, the timing controller 210 outputs the luminescence information corresponding to gray scales of the RGB image signals input from the image source, and the color information and an image kind information and so on adjusted by a user to the light source controller 410.

The gate control signal output to the gate driving part 230 includes a vertical synchronization start signal (STV) to command a start of outputting a gate on pulse (high interval of a gate signal), a gate clock signal to control an output time of the gate on signal, a gate on enable signal (OE) to restrict the width of the gate on pulse, etc. The data control signal output to the data driving part 220 includes a horizontal synchronization start signal (STH) to command a start of inputting of a gray scale signal, a load signal (LOAD or TP) to apply a corresponding data voltage to the data line, an inversion control signal (RVS) to invert a polarity of the data voltage, a data clock signal (HCLK), etc.

The gate driving part 230 is also called a scan driver and is connected to the gate line to apply the gate signal, which is a combination of a gate on voltage Von and a gate off voltage Voff, to the gate line.

The data driving part 220 is also called a source driver, receives a gray scale voltage from the gray scale voltage generating part, selects the gray scale voltage under control of the timing controller 210, and applies a data voltage Vd to the data line.

The light source controller 410 outputs a dimming signal to the PWM generating parts 421, 422 and 423 based on the image information input from an external source. That is, the light source controller 410 processes and changes the image information to the dimming signal which is capable of adjusting the strength of the driving power applied to the point light source 310, and outputs the dimming signal to the PWM generating parts 421, 422 and 423. The emission amount of the light from the point light source 310 is adjusted based on the dimming signal output to the PWM generating parts 421, 422 and 423, and the color and saturation of the light provided to the liquid crystal panel 100 is changed by combination of the light of different red, green and blue colors.

The inverter 430 includes an inductor L, a diode D, a capacitor C for power stability, and a switching part SW. Here, the inductor L is connected to a power source Vs through which basic power is input, and the switching part SW, and the diode is connected between each of the PWM generating parts 421, 422 and 423 and an output terminal of the driving power. The switching part SW serves to control a flow of current from the power source Vs to the point light sources 310 and may be provided as a metal oxide silicon field effect transistor (MOSFET) which is turned on/off by PWM control from the PWM generating parts 421, 422 and 423. An amount of current supplied to the point light sources 310 is adjusted according to on/off operation of the switching part SW, and accordingly, brightness of the point light sources 310 is determined.

The PWM generating parts 421, 422 and 423 perform a PWM control for the switching part SW to maintain the brightness of the point light sources 310 according to a predetermined command value. That is, the PWM generating parts 421, 422 and 423 generates a PWM signal to turn on/off the switching part SW.

The UI generating part 520 generates a UI including a backlight color adjustment menu for adjustment of the color characteristic of the light emitted from the point light source 310, a liquid crystal panel color adjustment menu for adjustment of the color characteristic of the image signal displayed on the liquid crystal panel 100, and a motion image saturation adjustment menu for adjustment of saturation of a motion image displayed on the liquid crystal panel 100. The UI is displayed on the liquid crystal panel 100 as shown in FIG. 2.

The user input part 510 serves to select and adjust the UI generated by the UI generating part 520. The user input part 510 is provided to allow a user to select and input the color characteristic of the image signal and includes keys or buttons and a key signal generating part that generates a key signal corresponding to an operation of the keys or buttons. The user input part 510 may be provided as a remote controller, a mouse, a key board, a key pad, or a touch panel, or may be provided outside a body casing of the LCD. In addition, the user input part 510 includes a signal receiving part that receives a control signal received from a device such as the remote controller. If the color characteristic of the image signal is changed through the user input part 510, information on the changed color characteristic is input to the timing controller 310 and the light source controller 410, and the image signal applied to the liquid crystal panel 100 is changed and the intensity of light emitted from the point light sources 310 is adjusted by control of the timing controller 310 and the light source controller 410.

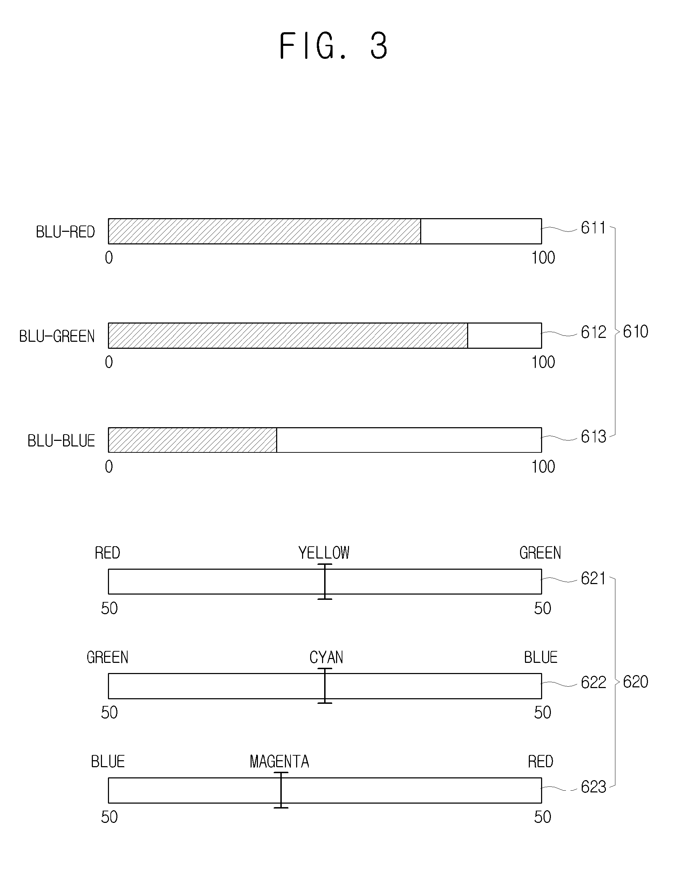

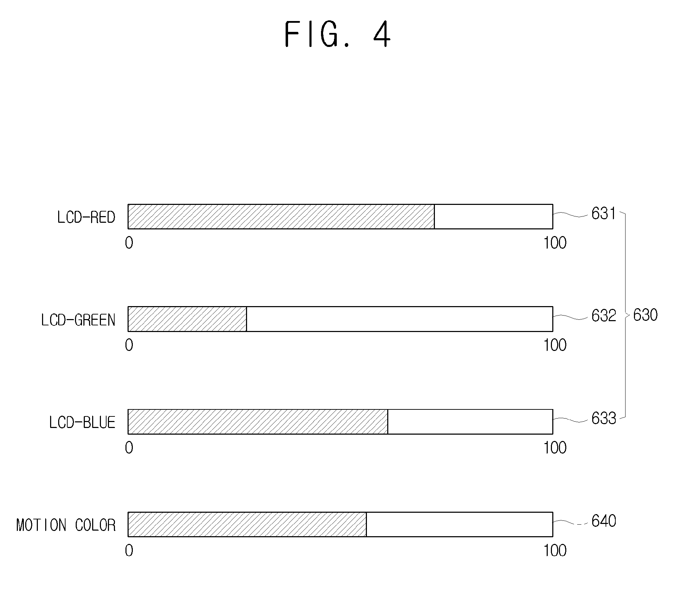

As shown in FIG. 2, the backlight color adjustment menu is displayed on the liquid crystal panel 100. FIG. 3 shows the backlight color adjustment menu according to the second exemplary embodiment of the present invention, and FIG. 4 shows the liquid crystal panel color adjustment menu according to the second exemplary embodiment of the present invention.

In this exemplary embodiment, the backlight color adjustment menu includes a first color adjustment menu 610 and a second color adjustment menu 620. The first color adjustment menu 610 is provided to deepen color of the light emitted from the point light source 310. That is, the first color adjustment menu 610 may be used to emphasize saturation of a displayed image. In this exemplary embodiment, the first color adjustment menu 610 includes a red color adjustment bar (BLU-RED) 611, a green color adjustment bar (BLU-GREEN) 612 and a blue color adjustment bar (BLU-BLUE) 613. These adjustment bars are indicated by saturation indexes between 0 and 100 to adjust saturation. For example, if a user wishes to emphasize a blue sky, the user may adjust the blue adjustment bar (BLU-BLUE) 613 close to 100. If the user wishes to deemphasize a green lawn, the user may reduce a saturation index of the green color adjustment bar (BLE-GREEN) 612. In this manner, the user may selectively adjust saturation for each of red, green and blue colors.

The second color adjustment bar 620 is provided to adjust a color mode of a mixture that is made by mixing two colors among red, green and blue colors (first colors). A color of the mixture will be referred as a second color. That is, the second color adjustment bar 620 is provided to emphasize one of the two first colors in the mixture. The second colors are yellow which is a mixture of red and green, a cyan which is a mixture of green and blue, and magenta which is a mixture of blue and red. To this end, the second color adjustment bar 620 includes a yellow color mode bar 621, a cyan color mode bar 622 and a magenta color mode bar 623, each of which includes a boundary line (I). As the boundary line (I) is biased to one side, a particular color is emphasized. For example, if the user wishes to express yellow close to red, the user moves the boundary line (I) toward red. If the user wishes to express magenta close to blue, the user moves the boundary line (I) toward blue.

In this exemplary embodiment, the UI generating part 520 generates the second color adjustment bar 620 to prevent an additional color change that may happen if saturation of the red, green and blue colors is emphasized through the first color adjustment bar 610, and to emphasize a complementary color contrast. For example, if an image of a red apple placed on a magenta table is displayed, these two colors may be more distinctly represented when the saturation index of the red color adjustment bar 611 is increased and the boundary line (I) of the magenta color adjustment bar 623 moves toward blue.

As an alternative exemplary embodiment, the first colors may be set to be cyan, magenta and yellow, while the second colors may be set to be red, green and blue, and colors other than the above-mentioned colors may be set.

A liquid crystal panel color adjustment menu 630 shown in FIG. 4 is provided to change the color characteristic of the image signal output from the liquid crystal driving part, that is, the timing controller 210, and includes a red color adjustment bar (LCD-RED) 631, a green color adjustment bar (LCD-GREEN) 632 and a blue color adjustment bar (LCD-BLUE) 633. The liquid crystal panel color adjustment menu 630 serves to adjust colors of an image displayed on the liquid crystal panel 100 in more various ways in combination with the backlight color adjustment menus 610 and 620.

In addition, in this exemplary embodiment, if an image displayed on the liquid crystal panel 100 is a motion image, the light source controller 410 adjusts the driving power supplied to the point light source 310 so that saturation of the moving image can be changed. For example, assume that an image in which a player dressed in green sportswear plays football in a green lawn is displayed. If the green color adjustment bar 632 of the liquid crystal panel color adjustment menu 630 and the green color adjustment bar 622 of the backlight color adjustment menu 620 are adjusted to distinctly view the player, saturation of the green lawn also increases, thereby making it difficult to clearly distinguish between the player and the lawn. In this case, if the saturation is changed using a motion image saturation adjustment menu 640 shown in FIG. 4, the green sportswear of the moving player can be distinguished from the lawn. The light source controller 410 can determine which image of what color is a motion image, based on the image information received from the timing controller 210. A user may increase or decrease saturation of the moving image by adjusting the moving image saturation adjustment menu 640, or may not use the moving image saturation adjustment function by not selecting the moving image saturation adjustment menu 640.

In this manner, the LCD of the present invention can adjust colors of an image by adjusting an image signal itself and can further adjust the colors of the image in more various ways by adjusting the point light sources 310 that provide a light of different colors to the liquid crystal panel 100.

As apparent from the above description, the present invention provides a backlight unit which is capable of adjusting a color characteristic of a light source part without difficulty, and a LCD using the backlight unit.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A liquid crystal display comprising:
a liquid crystal panel;
a liquid crystal driving part that processes an image signal, drives the liquid crystal panel based on the image signal, and outputs an image information of the image signal;
a light source part that provides light to the liquid crystal panel, the light sourcing part comprising a plurality of point light sources which emit light of different colors;
a user adjusting part that adjusts a color characteristic of an image displayed on the liquid crystal panel; and
a light source driving part that supplies a driving power to the plurality of point light sources based on the image information and the color characteristic.

2. The liquid crystal display according to claim 1, wherein the user adjusting part comprises:
a user interface (UI) generating part that generates a backlight color adjustment menu that adjusts the color characteristic of the light emitted from the point light sources; and a user input part that selects the backlight color adjustment menu,
wherein the light source driving part adjusts the driving power supplied to the point light sources based on the selected backlight color adjustment menu.

3. The liquid crystal display according to claim 2, wherein the backlight color adjustment menu comprises:
a first color adjustment menu that adjusts a saturation of a plurality of first colors; and
a second color adjustment menu that adjusts a color mode of second colors which are mixtures of two of the first colors.

4. The liquid crystal display according to claim 2, wherein the UI generating part further generates a liquid crystal panel color adjustment menu that changes a color characteristic of the image signal output from the liquid crystal driving part, and
wherein, if the liquid crystal panel color adjustment menu is selected through the user input part, the liquid crystal driving part adjusts a driving signal applied to the liquid crystal panel based on the selected liquid crystal panel color adjustment menu.

5. The liquid crystal display according to claim 1, wherein, if the image displayed on the liquid crystal panel is a moving image, the light source driving part adjusts the driving power supplied to the plurality of point light sources so that saturation of the moving image is changed.

6. The liquid crystal display according to claim 1, wherein the image information comprises a luminescence information and a color information of the image signal.

7. The liquid crystal display according to claim 1, wherein the plurality of point light sources comprise light emitting diodes or laser diodes.

8. A backlight unit comprising:
a light source part that comprises a plurality of point light sources which emit light of different colors; and
a light source driving part that supplies a driving power to the plurality of point light sources based on an image information of an image signal.

9. The backlight unit according to claim 8, wherein the image information comprises at least one of luminescence information, color information, and image kind information.

10. The backlight unit according to claim 9, wherein, if an image is a moving image, the light source driving part adjusts the driving power supplied to the plurality of point light sources based on the image kind information so that a saturation of the moving image is changed.

11. The backlight unit according to claim 8, wherein the point light sources comprise light emitting diodes or laser diodes.
